# EUROPEAN PATENT SPECIFICATION

(11) **EP 2 698 981 B1**
(45) Date of publication and mention of the grant of the patent: **18.08.2021**
(21) Application number: 12771210.7
(22) Date of filing: 08.03.2012
(51) Int. Cl.: G06K 9/00, B60R 1/00, G06T 7/73, H04N 7/18

(54) **DRIVING ASSISTANCE SYSTEM COMPRISING RAINDROP DETECTION**
FAHRASSISTENZSYSTEM MIT REGENTROPFENERKENNUNG
SYSTÈME D'ASSISTANCE À LA CONDUITE COMPRENANT LA DÉTECTION DES GOUTTES DE PLUIE

(30) Priority: 13.04.2011 JP 2011088727
(43) Date of publication of application: 19.02.2014
(73) Proprietor: NISSAN MOTOR CO., LTD., Yokohama-shi, Kanagawa 221-0023 (JP)
(72) Inventor: TSUCHIYA, Chikao, Kanagawa 243-0123 (JP); HAYAKAWA, Yasuhisa, Kanagawa 243-0123 (JP); FUKATA, Osamu, Kanagawa 243-0123 (JP)
(74) Representative: Hoefer & Partner Patentanwälte mbB
(86) International application number: PCT/JP2012/055900
(87) International publication number: WO 2012/140976

(56) References cited:
- EP-A2- 1 826 648
- JP-A- 2005 162 168
- JP-A- 2006 268 677
- JP-A- 2007 109 166
- JP-A- 2010 081 273
- None

## Description

### TECHNICAL FIELD

The present invention relates to a driving assistance system comprising a raindrop judging means configured to judge that a raindrop is attached to a lens of the image-capturing means.

### BACKGROUND ART

Heretofore, an on-vehicle monitor device has been proposed which includes a camera capable of switching between a first focal distance for detecting a raindrop attached to a vehicle and a second focal distance for capturing an image of surroundings of the vehicle, and which detects whether or not a raindrop is attached from an image captured by the camera at the first focal distance (see Patent Literature 1). Patent Literature 2 discloses an imaging environment recognition device. An imaging environment that greatly affects image recognition accuracy is recognized for applications in onboard systems of various sorts including imaging devices. An imaging device for imaging areas around the vehicle is mounted on a vehicle. Before executing image recognition processing, information is acquired on objects and texture, such as traffic signs and pedestrian crossings, present within a field of view of the imaging device. An object or texture present within the field of view is then recognized by an image recognition section. Degrees of distortion and defocus of a shape or texture of the object recognized are calculated based on the shape or texture of the object recognized and information previously acquired on the objects or texture. Imaging environment, such as water droplets or dirt on a lens, and whether fog occurs or not, is then recognized based on the degrees of distortion and defocus calculated from the shape or texture of the object recognized. Patent Literature 3 discloses a reference line that is added to a bumper provided at a rear part of a vehicle. The image picked up by the rear view camera is compared with that of the reference line stored in a memory, and rainfall is determined by detecting distortion of the reference line.

### CITATION LIST

### PATENT LITERATURE

Patent Literature 1: Japanese Patent Application Publication No. 2005-225250
Patent Literature 2 : EP 1 826 648 A2
Patent Literature 3: JP 2005 162168 A.

### SUMMARY OF INVENTION

### TECHNICAL PROBLEM

The on-vehicle monitor device described in Patent Literature 1, however, needs to switch the focal distance to detect a raindrop and thereby may lead to a possibility of reduction in the detection accuracy for the surrounding environment. It should be noted that this problem is not limited to the case of detecting a raindrop attached to a vehicle but also may occur in the case of detecting a raindrop attached to other moving objects (automatic navigation robot or the like).

Therefore, the present invention has an objective to provide a driving assistance system and a raindrop detection method thereof which are capable of detecting a raindrop while avoiding reduction in the detection accuracy for the surrounding environment.

### SOLUTION TO PROBLEM

The aforementioned objective is achieved by the subject matter of the independent claim. The dependent claims contain advantageous aspects of the present invention. A driving assistance system of the present invention provides various kinds of information to a driver of a moving object from an image-capturing result of surroundings of the moving object. A principal feature of this driving assistance system is that the driving assistance system includes: image-capturing means installed on the moving object and configured to capture a surrounding image including a portion of the moving object; first edge line storing means configured to store a first edge line detected from a first surrounding image captured in a normal condition by the image-capturing means; calculating means configured to calculate a matching degree between the first edge line stored in the first edge line storing means and a second edge line detected from a second surrounding image currently captured by the image-capturing means; and raindrop judging means configured to judge that a raindrop is attached to a lens unit of the image-capturing means, in response to a decrease in the matching degree between the first edge line and the second edge line.

### ADVANTAGEOUS EFFECTS OF INVENTION

According to the present invention, surrounding images including a portion of the moving object are captured, and the matching degree between the first edge line detected from the first surrounding image captured in normal conditions and the second edge line detected from the second surrounding image currently captured, is calculated. Then, in response to a decrease in the matching degree between the first edge line and the second edge line, it is judged that a raindrop is attached to the lens unit of the image-capturing means. Thus, raindrop detection can be performed without changing the focal distance, and raindrop detection can be performed while avoiding reduction in the detection accuracy for the surrounding environment.

### BRIEF DESCRIPTION OF DRAWINGS

The second embodiment and the modified examples of the first and second embodiments are not covered by the claims and are present for illustration purposes only.
[Fig. 1] Fig. 1 is a schematic configuration diagram of a driving assistance system according to a first embodiment of the present invention and illustrates an example where the driving assistance system is installed on a moving object such as a vehicle.
[Fig. 2] Fig. 2 is a block diagram illustrating details of the computer illustrated in Fig. 1.
[Fig. 3] Fig. 3 is a diagram illustrating an image captured by the camera illustrated in Figs. 1 and 2.
[Fig. 4] Fig. 4 is a diagram illustrating an outline of deviation degree calculation by the deviation degree calculation unit illustrated in Fig. 3.
[Fig. 5] Fig. 5 is a flowchart illustrating a raindrop detection method according to the first embodiment of the present invention.
[Fig. 6] Fig. 6 is a flowchart illustrating a raindrop detection method according to a modified example of the first embodiment of the present invention.
[Fig. 7] Fig. 7 is a block diagram illustrating details of a computer of a driving assistance system according to a second embodiment of the present invention.
[Fig. 8] Fig. 8 is a diagram illustrating an image captured by the camera illustrated in Fig. 7.
[Fig. 9] Fig. 9 is a flowchart illustrating a raindrop detection method according to the second embodiment of the present invention.
[Fig. 10] Fig. 10 is a flowchart illustrating a raindrop detection method according to a modified example of the second embodiment of the present invention.
[Fig. 11] Fig. 11 is a block diagram illustrating details of a computer of a driving assistance system according to a third embodiment of the present invention.
[Fig. 12] Fig. 12 is a flowchart illustrating a raindrop detection method according to the third embodiment of the present invention.
[Fig. 13] Fig. 13 is a flowchart illustrating a raindrop detection method according to a fourth embodiment of the present invention.

### DESCRIPTION OF EMBODIMENTS

Hereinafter, preferred embodiments of the present invention are described based on the drawings. It should be noted that the following several embodiments include the same component elements. For this reason, in the following description, common reference signs are attached to the same component elements and the overlapping description is omitted.

### [First Embodiment]

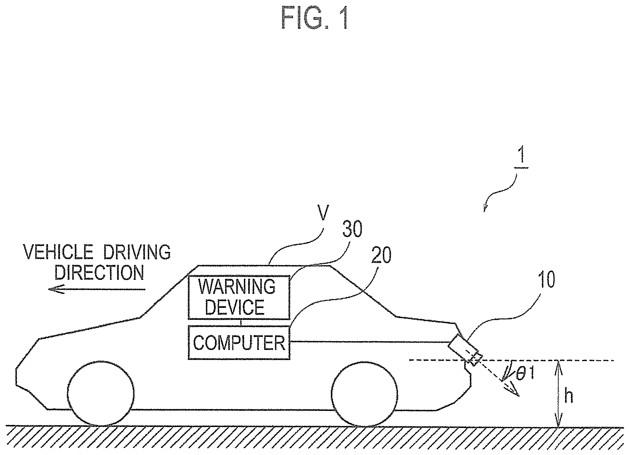

Fig. 1 is a schematic configuration diagram of a driving assistance system 1 according to the present embodiment and illustrates an example where the driving assistance system 1 is installed in a moving object such as a vehicle V. The driving assistance system 1 illustrated in Fig. 1 is configured to provide various kinds of information to a driver of the system-equipped vehicle V from an image-capturing result of the surroundings of the system-equipped vehicle V and includes a camera (image-capturing means) 10, a computer 20, and a warning device 30.

The camera 10 illustrated in Fig. 1 is installed at a position at a height h on the rear of the system-equipped vehicle V with the optical axis directed downward at an angle θ1 from the horizontal. The camera 10 is configured to capture an image of a detection region from the aforementioned position. On the basis of the image captured by the camera 10, the computer 20 is configured to detect an obstruction or the like existing in the surroundings of the system-equipped vehicle V. In addition, the computer 20 in the present embodiment is configured to determine whether or not a raindrop is attached to the lens unit of the camera 10 in addition to detecting an obstruction or the like.

The warning device 30 is configured to issue a warning to the driver of the system-equipped vehicle V in a case where the obstruction or the like detected by the computer 20 is likely to come into contact with the system-equipped vehicle V. Warnings can also be issued for other situations. Moreover, in a case where a raindrop is attached to the lens unit, the warning device 30 also issues a warning about the raindrop attachment to the driver. Here, the warning method may be via presentation on an image display or via a voice announcement.

Additionally, in the present embodiment, the camera 10 is configured to capture an image of a location behind the system-equipped vehicle V and cause a bumper, as a portion P of the system-equipped vehicle V, to be included in the image-capturing range. In other words, the camera (image-capturing means) 10 according to the present embodiment is installed on the system-equipped vehicle V (the moving object) and captures surrounding images (a first surrounding image or a second surrounding image) I including the portion P of the system-equipped vehicle V. Here, the portion of the system-equipped vehicle V is not limited to the bumper but may be any portion whose image can be captured stably. For example, the image-capturing range may include a number plate, a rear spoiler, a roof spoiler, a casing of the camera 10, or the like depending on the installation position or the optical axis direction of the camera 10. Various methods may be employed as the method of installing the camera 10 on the system-equipped vehicle V. For example, the camera 10 may be installed on the system-equipped vehicle V in an integrally assembled manner or may be detachably installed on the system-equipped vehicle V.

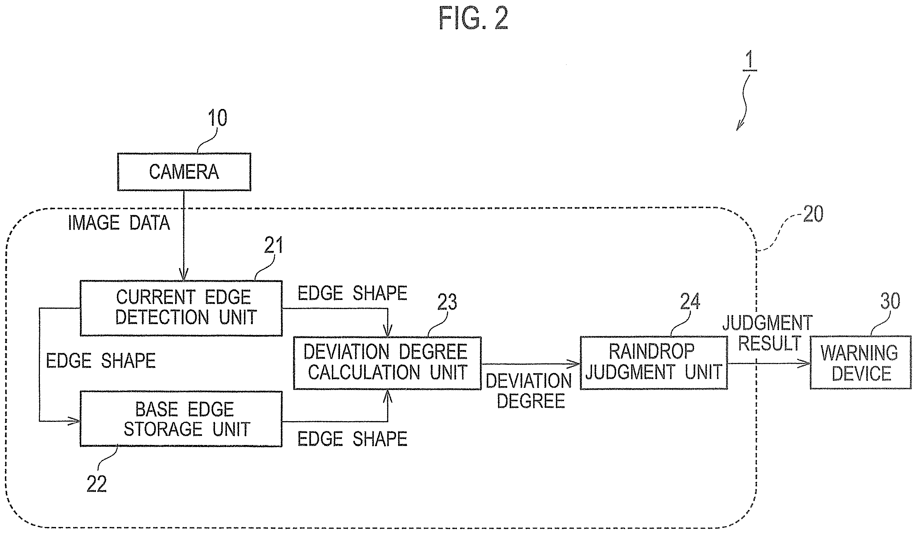

Fig. 2 is a block diagram illustrating details of the computer 20 illustrated in Fig. 1. Here, Fig. 2 also illustrates the camera 10 and the warning device 30 to clearly show how these parts are connected.

As illustrated in Fig. 2, the computer 20 includes a current edge detection unit (edge detecting means) 21, a reference edge storage unit (first edge line storing means: reference edge storing means) 22, a deviation degree calculation unit (calculating means) 23, and a raindrop judgment unit (raindrop judging means) 24.

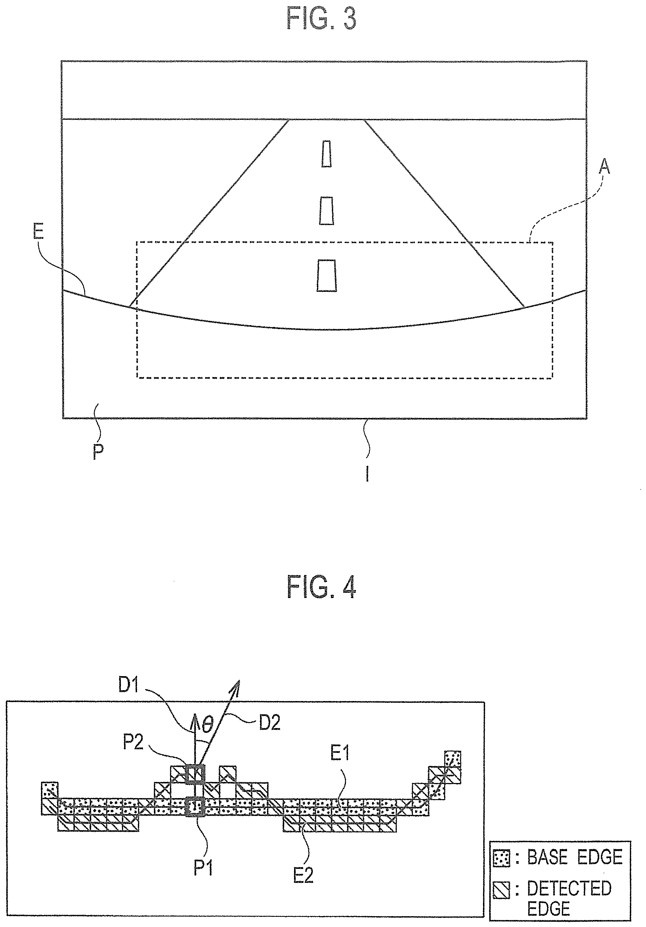

The current edge detection unit 21 is configured to detect an edge E of the portion P of the system-equipped vehicle V in an image captured by the camera 10. Fig. 3 is a diagram illustrating the surrounding image (the first surrounding image and the second surrounding image) I captured by the camera 10 illustrated in Figs. 1 and 2. As illustrated in Fig. 3, the captured image includes the portion P (for example, the bumper) of the system-equipped vehicle V in addition to a road surface and the like. The current edge detection unit 21 is configured to detect an edge (second edge line) E2 in a predetermined region A (at least a partial area of the surrounding image I including a portion of the moving object: a region where the image of the bumper of the system-equipped vehicle V is to be captured in the present embodiment) within the image described above. Here, as the edge detection method, a method can be employed which involves application of a Sobel filter, Laplacian filter, or the like and thereafter binarization using a predetermined threshold.

In the example illustrated in Fig. 3, the captured image (surrounding image I) includes the bumper, and the predetermined region A is set to a region where the image of the bumper of the system-equipped vehicle V is to be captured. For this reason, the predetermined region A is located at and around a center lower portion of the captured image (surrounding image I). In the case where a portion P of the system-equipped vehicle V other than the bumper is included in the captured image (surrounding image I), another region including the portion P of the system-equipped vehicle V may be set as the predetermined region A as needed.

Here, Fig. 2 is referred to again. The reference edge storage unit 22 is configured to previously store, as an initial value, a reference edge shape (first edge line) E1 for the portion P of the system-equipped vehicle V targeted for image capturing by the camera 10. In the present embodiment, the reference edge storage unit 22 stores, as the reference edge shape (first edge line) E1, a first edge line E1 detected from a first surrounding image I captured by the camera (image-capturing means) 10 in normal conditions.

Specifically, the reference edge storage unit 22 stores in advance the edge shape E1 obtained from the portion P of the system-equipped vehicle V in normal conditions such as fine weather or the like (when no raindrops are attached to the lens unit of the camera 10).

As described above, the reference edge storage unit (reference edge storing means: first edge line storing means) 22 is configured to store the reference edge shape (first edge line) E1 detected from the first surrounding image I (predetermined region A) captured in normal conditions (in fine weather or the like) by the camera (image-capturing means) 10.

In contrast, the current edge detection unit (edge detecting means) 21 is configured to detect an edge (second edge line) E2 from a second surrounding image I (predetermined region A) currently captured by the camera (image-capturing means) 10.

The deviation degree calculation unit 23 is configured to calculate a matching degree between the reference edge shape (first edge line) E1 detected from the first surrounding image I (predetermined region A) captured in normal conditions (in fine weather or the like) by the camera (image-capturing means) 10 and the edge (second edge line) E2 detected from the second surrounding image I (predetermined region A) currently captured by the camera (image-capturing means) 10.

More specifically, the deviation degree calculation unit 23 calculates a deviation degree between the edge shape (first edge line) E1 stored in the reference edge storage unit 22 and the edge (second edge line) E2 detected by the current edge detection unit 21. In this calculation, the edge detected from the second surrounding image I (predetermined region A) currently captured by the camera (image-capturing means) 10 is used as the edge (second edge line) E2.

Fig. 4 is a diagram illustrating an outline of deviation degree calculation by the deviation degree calculation unit 23 illustrated in Fig. 3. The deviation degree calculation method is described below by using two exemplary methods but is not limited to the following two.

Firstly, the first method is described. As illustrated in Fig. 4, in a case where a raindrop is attached to the lens unit of the camera 10, more specifically, in a case where edge detection is performed on the second surrounding image I (predetermined region A) captured with a raindrop attached to the lens unit of the camera 10, the edge (second edge line: detected edge) E2 detected by the current edge detection unit 21 and the reference edge shape (first edge line: reference edge) E1 stored in the reference edge storage unit 22 differ from each other. This is because the raindrop attached to the lens unit refracts light differently and effectively forms a new lens.

In the first method, the deviation degree calculation unit 23 firstly extracts a special point P2 on the detected edge (second edge line) E2 and a point P1 on the reference edge (first edge line) E1 which is estimated as corresponding to the special point P2. In this process, the deviation degree calculation unit 23 extracts, as the corresponding point, the point P1 next to the special point P2 in the vertical direction of the image, for example. Then, the deviation degree calculation unit 23 determines how many pixels the extracted two points P1, P2 are shifted from each other. In the example illustrated in Fig. 4, the two points P1, P2 are shifted from each other by two pixels. Thus, the deviation degree calculation unit 23 determines the deviation degree between the two points P1, P2 as "2".

The deviation degree calculation unit 23 determines the deviation degrees between all corresponding points P1, P2. Specifically, the deviation degree calculation unit 23 calculates the deviation degrees between the special points and the corresponding points one by one from the leftmost point to the rightmost point on the detected edge E2 and the reference edge E1 and then calculates the sum of the calculated deviation degrees as a final deviation degree.

Next, the second method is described. In the second method, the deviation degree calculation unit 23 uses luminance gradients. Specifically, the deviation degree calculation unit 23 calculates luminance gradient directions (see reference signs D1, D2 in Fig. 4) for the respective two points P1, P2, for example. Here, the luminance gradient direction D1 for the reference edge E1 may be calculated in advance.

Subsequently, the deviation degree calculation unit 23 calculates an angle θ formed by the two luminance gradient directions D1, D2. Then, the deviation degree calculation unit 23 determines the deviation degree between the two points P1, P2 as θ.

The deviation degree calculation unit 23 determines the deviation degrees between all corresponding points P1, P2. Specifically, the deviation degree calculation unit 23 calculates the deviation degrees from the luminance gradient directions one by one from the leftmost point to the rightmost point on the detected edge E2 and the reference edge E1 and then calculates the sum of the calculated deviation degrees as a final deviation degree.

Here, Fig. 2 is referred to again. The raindrop judgment unit 24 is configured to judge that a raindrop is attached to the lens unit of the camera 10 in response to a decrease in the matching degree between the first edge line and the second edge line. Specifically, when the deviation degree calculated by the deviation degree calculation unit 23 is equal to or larger than a predetermined value, the raindrop judgment unit 24 determines that the matching degree has decreased and judges that a raindrop is attached to the lens unit of the camera 10. As described in reference to Fig. 4, when a raindrop is attached to the lens unit, the raindrop forms a new lens and the detected edge E2 and the reference edge E1 deviate from each other. In contrast to this, when no raindrop is attached to the lens unit, the detected edge E2 and the reference edge E1 do not deviate from each other theoretically. For this reason, when the deviation degree is equal to or larger than the predetermined value, the raindrop judgment unit 24 determines that the matching degree has decreased and judges that a raindrop is attached to the lens unit of the camera 10. In addition, if it is judged that a raindrop is attached to the lens unit of the camera 10, the raindrop judgment unit 24 sends a notification of the judgment result to the warning device 30. In response to the notification, the warning device 30 presents, to the driver, a voice message or image indicating that a raindrop is attached (for example, an indication that the camera view is poor).

It should be noted that the matching degree and the deviation degree have a reverse relationship where the edges are judged as deviating (not matching) when the foregoing deviation degree is equal to or larger than the predetermined value, and are judged as not deviating (matching) when the deviation degree is smaller than the predetermined value.

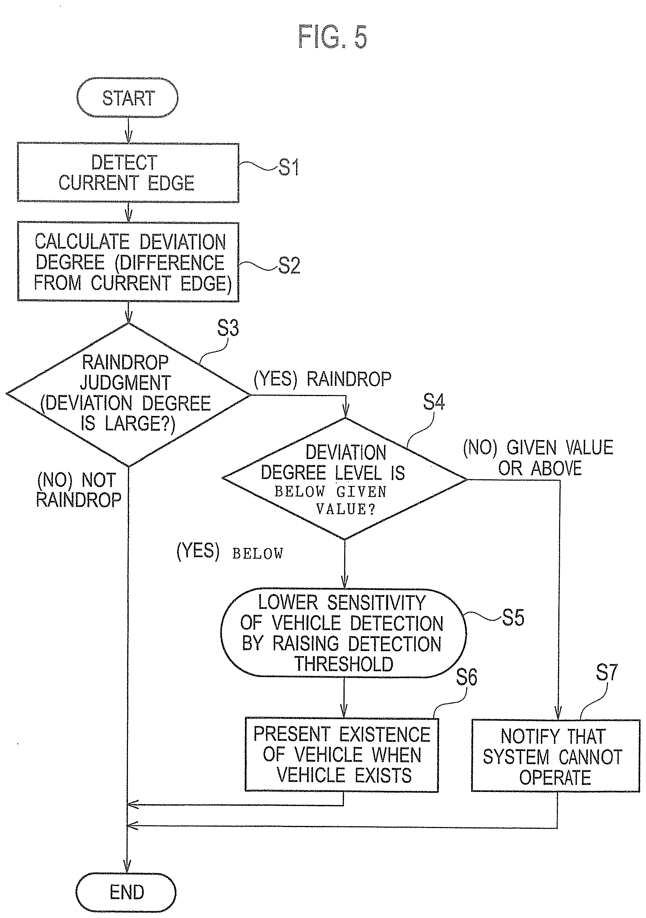

Next, the raindrop detection method is described in reference to a flowchart. Fig. 5 is a flowchart illustrating the raindrop detection method according to the present embodiment.

As described above, firstly, the camera (image-capturing means) 10 installed on the system-equipped vehicle V (a moving object) captures a current surrounding image (second surrounding image) I including the portion P of the system-equipped vehicle V (image-capturing step).

Then, as illustrated in Fig. 5, the current edge detection unit 21 detects an edge from the predetermined region A in the image captured by the camera 10 (S1). Thus, in step S1, an edge detecting step is performed to detect the edge (second edge line: detected edge) E2 for the portion P of the system-equipped vehicle V in the image currently captured in the image-capturing step.

Subsequently, the deviation degree calculation unit 23 calculates the deviation degree between the edge E2 detected in step S1 and the reference edge E1 stored in the reference edge storage unit 22 (S2). Any one of the methods described in reference to Fig. 4 or other method is employed as the deviation degree calculation method. Thus, in step S2, a calculating step is performed to calculate the deviation degree between the reference edge (first edge line) E1, stored in advance for the portion of the moving object targeted for image capturing in the image-capturing step, and the edge (second edge line: detected edge) E2 detected in the edge detecting step.

Next, the raindrop judgment unit 24 judges if the deviation degree calculated in step S2 is equal to or larger than the predetermined value (S3). If it is judged that the deviation degree calculated in step S2 is equal to or larger than the predetermined value (S3: YES), the raindrop judgment unit 24 determines that the matching degree has decreased, judges that a raindrop is attached to the lens unit, and sends a notification of the judgment result to the warning device 30.

Thus, in step S3, a raindrop judging step is performed; wherein, if the deviation degree calculated in the calculating step is equal to or larger than the predetermined value, the matching degree is determined to have decreased and thereby it is judged that a raindrop is attached to the lens unit of the camera 10.

Here, when the raindrop judgment unit 24 judges that a raindrop is attached to the lens unit of the camera 10, the warning device 30 judges whether the deviation degree calculated in step S2 is equal to or higher than a given value (S4). For this deviation degree judgment, the warning device 30 can be provided with a deviation degree judgment unit, for example. The deviation degree judgment unit is configured to judge that the deviation degree is high when the deviation degree calculated in step S2 is equal to or larger than the preset given value (a value larger than the predetermined value used for the determination in step S3) or to judge that the deviation degree is low when the deviation degree is smaller than the given value.

Then, if the deviation degree is judged as lower than the given value (the value used for the determination in step S4) (S4: YES), the sensitivity to detect another vehicle (another moving object) from the current surrounding image (second surrounding image) I currently captured in the image-capturing step is lowered (S5). Detection sensitivity lowering means provided in the warning device 30 lowers the sensitivity to detect another vehicle by raising a detection threshold used by a not-illustrated vehicle detection unit to detect another moving object (another vehicle) from the current surrounding image (second surrounding image) I.

As for the method of lowering the vehicle detection sensitivity, the whole sensitivity can be lowered by adjusting a threshold for an entire difference or edge, or the sensitivity of the relevant image part (part where a raindrop is attached) can be lowered. Instead, the whole sensitivity can be adjusted first, and then the sensitivity of the relevant part (part where a raindrop is attached) can be further lowered.

Thereafter, if there is another vehicle, the warning device 30 presents the existence of the vehicle (S6). Specifically, the not-illustrated vehicle detection unit performs an operation of detecting another vehicle (another moving object), and if another vehicle (another moving object) is detected, the warning device 30 presents the existence of the vehicle. After that, the processing illustrated in Fig. 5 is completed and is iterated from the beginning.

On the other hand, if the deviation degree is judged as equal to or higher than the given value (the value used for the determination in step S4) (S4: NO), the warning device 30 notifies that the system cannot operate (S7). Specifically, when the deviation degree is equal to or higher than the given value (the value used for the determination in step S4), it is judged that raindrops are attached to the lens unit of the camera 10 so heavily that detection of another vehicle by using the camera 10 is impossible, and a notification unit of the warning device 30 notifies that detection of another vehicle is impossible. After that, the processing illustrated in Fig. 5 is completed and is iterated from the beginning.

Meanwhile, if it is judged that the deviation degree is smaller than the predetermined value (S3: NO), the raindrop judgment unit 24 determines that the matching degree has not decreased and judges that no raindrop is attached to the lens unit of the camera 10. After that, the processing illustrated in Fig. 5 is completed and is iterated from the beginning.

As described above, according to the driving assistance system 1 and the raindrop detection method thereof of the present embodiment, the current surrounding image I including the portion P of the system-equipped vehicle V (a moving object) is captured, and the matching degree between the reference edge (first edge line) E1 detected from the first surrounding image I captured in normal conditions and the edge (second edge line) E2 detected from the currently-captured second surrounding image I is calculated. Then, in response to a decrease in the matching degree between the reference edge (first edge line) E1 and the edge (second edge line) E2, it is judged that a raindrop is attached to the lens unit of the camera (image-capturing means) 10.

Specifically, the image-capturing range includes not only the surroundings of the system-equipped vehicle V but also the portion P of the system-equipped vehicle V, and the edge of the portion P of the system-equipped vehicle V to be obtained by edge detection is stored as the reference edge shape (first edge line) E1. In addition, the edge (second edge line) E2 is detected for the portion P of the system-equipped vehicle V in the actually captured image, and the deviation degree from the stored edge shape is calculated. If the deviation degree is equal to or larger than the predetermined value, the matching degree is determined as decreased, and a raindrop is determined as attached to the lens unit. Here, if a raindrop is attached to the lens unit, the light is refracted by the raindrop, and thereby the stored edge shape and the detected edge deviate from each other. In this way, raindrop detection can be performed without changing the focal distance, and also raindrop detection can be performed while avoiding reduction in the detection accuracy for the surrounding environment.

In addition, when the raindrop judgment unit (raindrop judging means) 24 judges that a raindrop is attached to the lens unit of the camera (image-capturing means) 10, the sensitivity to detect another vehicle (another moving object) from the second surrounding image I currently captured by the camera (image-capturing means) 10 is lowered. This makes it possible to prevent an object other than another vehicle (another moving object) from being detected as another vehicle (other moving object) when using the camera 10 in which a raindrop is attached to the lens.

Moreover, since the camera 10 is installed with the optical axis directed obliquely downward from the horizontal direction, a raindrop attached to the lens unit can be caused to stay at a certain position in a lower portion of the lens. This makes it possible to prevent a situation where sequential change of the raindrop position makes edge detection difficult.

Additionally, the calculation of the deviation degree from the difference between the luminance gradient directions enables detection of a phenomenon where the luminance gradients change along with the formation of a lens system by the raindrop. Thus, the raindrop detection accuracy can be improved.

### (Modified Example of First Embodiment)

The driving assistance system 1 and the raindrop detection method thereof according to the present modified example are basically the same as those in the foregoing first embodiment, but different processing is performed after the raindrop judgment unit 24 makes the raindrop judgment.

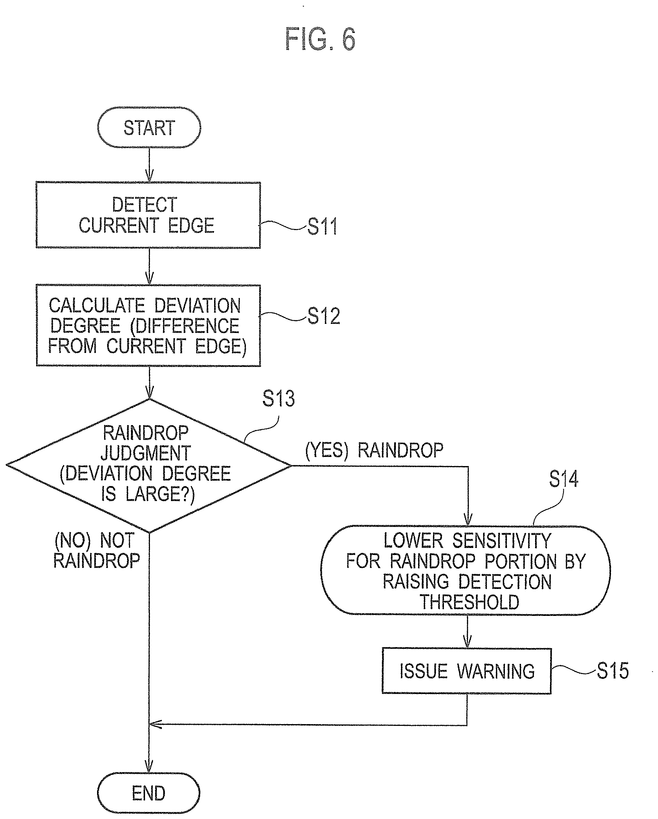

Hereinafter, the raindrop detection method according to the present modified example is explained with reference to the flowchart in Fig. 6.

. To begin with, the same processing as in the above first embodiment is performed in steps S11 to S13. To be more precise, the camera (image-capturing means) 10 installed on the system-equipped vehicle V (a moving object) captures a current surrounding image (second surrounding image) I including the portion P of the system-equipped vehicle V.

Then, the current edge detection unit 21 detects the edge in the predetermined region A in the image captured by the camera 10 (S11).

Next, the deviation degree calculation unit 23 calculates the deviation degree between the edge E2 detected in step S11 and the reference edge E1 stored in the reference edge storage unit 22 (S12). Here, any one of the methods described in reference to Fig. 4 or other method is employed as the deviation degree calculation method.

Then, the raindrop judgment unit 24 judges if the deviation degree calculated in step S12 is equal to or larger than the predetermined value (S13).

If it is judged that the deviation degree is equal to or larger than the predetermined value (S13: YES), the raindrop judgment unit 24 determines that the matching degree has decreased, judges that a raindrop is attached to the lens unit, and sends the notification of the judgment result to the warning device 30.

Here, when the raindrop judgment unit 24 judges that a raindrop is attached to the lens unit of the camera 10, raindrop detection sensitivity is lowered for the part which is judged as having the raindrop attached thereto, within the predetermined region A of the surrounding image (second surrounding image) I (S14). For example, raindrop detection sensitivity lowering means provided in the warning device 30 can raise the detection threshold for the part which is judged as having the raindrop attached thereto, within the predetermined region A of the current surrounding image (second surrounding image) I, and thereby can lower the raindrop detection sensitivity for the part in comparison to the remaining part.

Thereafter, the processing illustrated in Fig. 6 is completed and then iterated from the beginning. It should be noted that, if a raindrop is judged as being attached to the lens unit of the camera 10, the judgment in the second and following iterations is made using the lowered sensitivity for the part judged as having the raindrop within the predetermined region A, but the detection threshold sensitivity remains unchanged for the other part. This allows detection of additional attached raindrops. Thus, when the additional number reaches a predetermined level or above, the deviation degree may be corrected in accordance with an equation such as "deviation degree = raindrop detection deviation degree × (1 + increased amount)", for example. Such correction of the deviation degree enables handling of a situation where the number of raindrops increases sharply.

Moreover, as for the part with the adjusted sensitivity due to the raindrop attachment, it is preferable to perform processing which includes the excluded part again after a certain period of time has elapsed. This is because the raindrop attachment condition varies over time due to evaporation of raindrops or other reasons.

Meanwhile, if it is judged that the deviation degree is smaller than the predetermined value (S13: NO), the raindrop judgment unit 24 determines that the matching degree has not decreased and judges that no raindrop is attached to the lens unit of the camera 10. After that, the processing illustrated in Fig. 6 is completed and then iterated from the beginning.

The foregoing modified example can also produce operations and effects similar to those in the above first embodiment.

Moreover, in the present modified example, when the raindrop judgment unit 24 judges that a raindrop is attached to the lens unit of the camera 10, the raindrop detection sensitivity is lowered for the part judged as having the raindrop within the predetermined region A in the surrounding image (second surrounding image) I. The lowering of the raindrop detection sensitivity for the part having a raindrop attached thereto, as described above, makes it easier to detect a raindrop newly attached to the predetermined region A.

### (Second Embodiment)

A driving assistance system 1A and a raindrop detection method according to the present embodiment are basically the same as those in the aforementioned first embodiment.

Specifically, the driving assistance system 1A is configured to provide various kinds of information to the driver of a system-equipped vehicle V from an image-capturing result of the surroundings of the system-equipped vehicle V, and includes a camera (image-capturing means) 10, a computer 20A, and a warning device 30.

This camera 10 is also installed on the system-equipped vehicle V (a moving object) and is configured to capture surrounding images (first surrounding image and second surrounding image) I including a portion P of the system-equipped vehicle V.

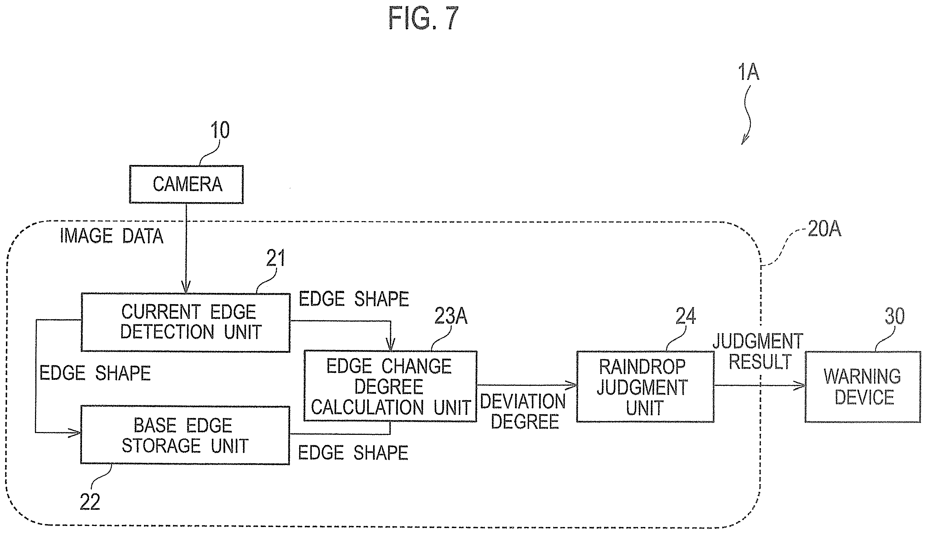

In the present embodiment, the computer 20A includes a current edge detection unit (edge detecting means) 21, a reference edge storage unit (first edge line storing means: reference edge storing means) 22, an edge change degree calculation unit (calculating means) 23A, and a raindrop judgment unit (raindrop judging means) 24, as illustrated in Fig. 7.

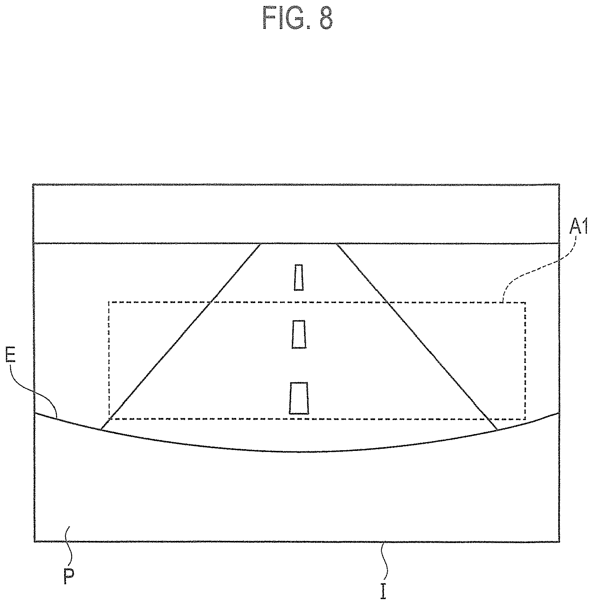

In the present embodiment, as illustrated in Fig. 8, the current edge detection unit 21 detects an edge (second edge line) E2 for a predetermined region A1 (a region that is an area above the bumper of the system-equipped vehicle V where no image of the bumper is captured in the present embodiment) within the surrounding image (first surrounding image and second surrounding image) I including the portion P of the system-equipped vehicle V (the moving object).

Then, the edge change degree calculation unit (calculating means) 23A is configured to calculate a matching degree between a reference edge shape (first edge line) E1 detected from a first surrounding image I (predetermined region A1) captured by the camera (image-capturing means) 10 in normal conditions (in fine weather or the like), and an edge (second edge line) E2 detected from a second surrounding image I (predetermined region Al) currently captured by the camera (image-capturing means) 10.

Specifically, the edge change degree calculation unit (calculating means) 23A calculates an edge shape change degree between the edge shape (first edge line) E1 stored in the reference edge storage unit 22 and the edge (second edge line) E2 detected by the current edge detection unit 21. In this process, an edge detected from the second surrounding image I (predetermined region A1), currently captured by the camera (image-capturing means) 10 is used as the edge (second edge line) E2.

Here also, any one of the methods described in reference to Fig. 4 or other method is employed as the method of calculating an edge shape change degree. This edge shape change degree also has a reverse relationship with the matching degree.

However, as for the method of calculating an edge shape change degree, a method can be employed in which a part where less edge appears than in the surrounding part is judged as having a raindrop attached thereto.

When this method is employed, the part having a raindrop attached thereto is judged in the following way.

To begin with, the area above the bumper set as the predetermined region A1 is an area where a road surface stably shows up as a steady background object, and the edge intensity (luminance difference between pixels) in this area is usually constant. For this reason, if there is no part having an edge intensity lower than its surrounding part, it can be judged that no raindrop is attached. On the other hand, if there is a part having an edge intensity lower than its surrounding part, the part having the lower edge intensity can be judged as a part to which a raindrop is attached. To be more specific, the integral of a part judged as having a low edge intensity when viewed in time sequence is calculated (for example, a counter for the part is incremented when the edge intensity is equal to or smaller than a predetermined value). Then, when the counter for the part reaches a predetermined value or above, the part is recognized as having a large deviation degree from the surrounding part and thereby judged as having raindrop detection. Note that this method may be employed for the case of detecting the edge (second edge line) E2 where the image of the bumper of the system-equipped vehicle V is captured in the predetermined region A, as in the first embodiment. To put it differently, the above process may be applied to a vehicle body, and when the edge intensity of a portion of the vehicle body becomes lower than the edge intensity of the vehicle body usually observed, the portion having the lower edge intensity may be judged as having a raindrop attached thereto.

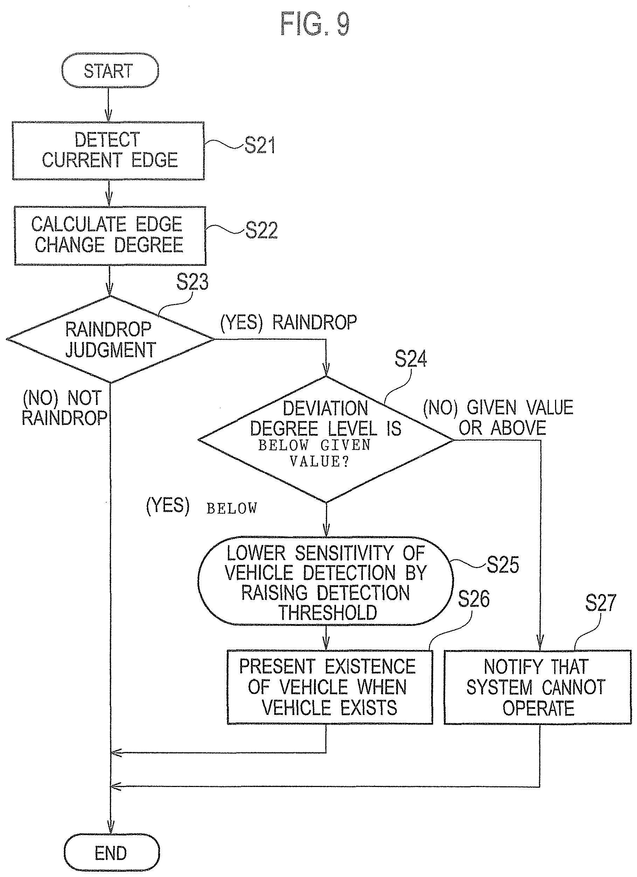

Next, the raindrop detection method is explained with reference to a flowchart. Fig. 9 is a flowchart illustrating the raindrop detection method according to the present embodiment.

First of all, the camera (image-capturing means) 10 installed on the system-equipped vehicle V (a moving object) captures a current surrounding image (second surrounding image) I including the portion P of the system-equipped vehicle V (image-capturing step).

Next, as illustrated in Fig. 5, the current edge detection unit 21 detects an edge for the predetermined region A1 in the image captured by the camera 10 (S21).

Thereafter, the edge change degree calculation unit (calculating means) 23A calculates an edge shape change degree between the edge E2 detected in step S21 and the reference edge E1 stored in the reference edge storage unit 22 (S22). The foregoing method or the like is employed as the method of calculating the edge shape change degree.

After that, the raindrop judgment unit 24 judges if the edge shape change degree calculated in step S22 is smaller than a predetermined value (S23). Then, if it is judged that the edge shape change degree is equal to or smaller than the predetermined value (S23: YES), the raindrop judgment unit 24 determines that the matching degree has decreased, judges that a raindrop is attached to the lens unit, and sends the notification of the judgment result to the warning device 30.

When the raindrop judgment unit 24 judges that the raindrop is attached to the lens unit of the camera 10 in this step, processing similar to those of steps S4 to S6 described in the foregoing first embodiment is performed.

Specifically, the warning device 30 judges if the deviation degree of the edge shape change degree calculated in step S22 is smaller than a given value (S24).

Then, if the deviation degree is judged as lower than the given value (the value used for the determination in step S24) (S24: YES), the sensitivity to detect another vehicle (another moving object) from the current surrounding image (second surrounding image) I currently captured in the image-capturing step is lowered (S25).

Thereafter, if there is another vehicle, the warning device 30 presents the existence of the vehicle (S26). After that, the processing illustrated in Fig. 9 is completed and then iterated from the beginning.

On the other hand, if the deviation degree is judged as equal to or higher than the given value (the value used for the determination in step S24) (S24: NO), the warning device 30 notifies that the system cannot operate (S27). After that, the processing illustrated in Fig. 9 is completed, and is then iterated from the beginning.

Meanwhile, if it is judged that the edge shape change degree is equal to or larger than the predetermined value (S23: NO), the raindrop judgment unit 24 determines that the matching degree has not decreased, and thereby judges that no raindrop is attached to the lens unit of the camera 10. After that, the processing illustrated in Fig. 9 is completed and then iterated from the beginning.

The aforementioned embodiment can also produce operations and effects similar to those in the foregoing first embodiment.

### (Modified Example of Second Embodiment)

The driving assistance system 1A and the raindrop detection method thereof according to the present modified example are basically the same as those in the foregoing second embodiment, but different processing is performed after the raindrop judgment unit 24 makes the raindrop judgment.

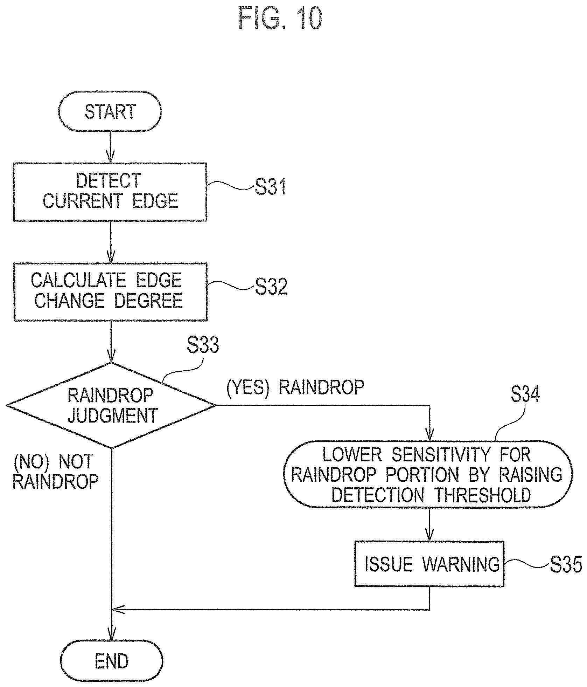

Hereinafter, the raindrop detection method according to the present modified example is explained with reference to a flowchart in Fig. 10.

To begin with, the same processing as in the above second embodiment is performed in steps S31 to S33. Then, in steps S34 and S35, the same processing as in the above modified example of the first embodiment is performed.

To be more precise, the camera (image-capturing means) 10 installed on the system-equipped vehicle V (a moving object) captures a current surrounding image (second surrounding image) I including the portion P of the system-equipped vehicle V.

Then, the current edge detection unit 21 detects the edge for the predetermined region A1 in the image captured by the camera 10 (S31).

Next, an edge change degree calculation unit (calculating means) 23A calculates the edge shape change degree between the edge E2 detected in step S31 and the reference edge E1 stored in the reference edge storage unit 22 (S32). The foregoing method or the like is employed as the method of calculating the edge shape change degree.

Subsequently, the raindrop judgment unit 24 judges if the edge shape change degree calculated in step S32 is equal to or larger than the predetermined value (S33).

Then, if it is judged that the edge shape change degree is smaller than the predetermined value (S33: YES), the raindrop judgment unit 24 determines that the matching degree has decreased, judges that a raindrop is attached to the lens unit, and sends the notification of the judgment result to the warning device 30.

Here, when the raindrop judgment unit 24 judges that a raindrop is attached to the lens unit of the camera 10, raindrop detection sensitivity is lowered for the part which is judged as having the raindrop attached thereto, within the predetermined region A1 of the surrounding image (second surrounding image) I (S34).

After that, the processing illustrated in Fig. 10 is completed, and then iterated from the beginning.

Meanwhile, if it is judged that the edge shape change degree is equal to or larger than the predetermined value (S33: NO), the raindrop judgment unit 24 determines that the matching degree has not decreased and thereby judges that no raindrop is attached to the lens unit of the camera 10. After that, the processing illustrated in Fig. 10 is completed and then iterated from the beginning.

The aforementioned modified example can also produce operations and effects similar to those in the foregoing first embodiment and the modified example thereof, or the foregoing second embodiment.

### (Third Embodiment)

A driving assistance system 1B and a raindrop detection method thereof according to the present embodiment are basically the same as those in the foregoing first embodiment.

Specifically, the driving assistance system 1B is configured to provide various kinds of information to the driver of a system-equipped vehicle V from an image-capturing result of the surroundings of the system-equipped vehicle V and includes a camera (image-capturing means) 10, a computer 20B, and a warning device 30.

This camera 10 is also installed on the system-equipped vehicle V (a moving object) and is configured to capture surrounding images (first surrounding image and second surrounding image) I including a portion P of the system-equipped vehicle V.

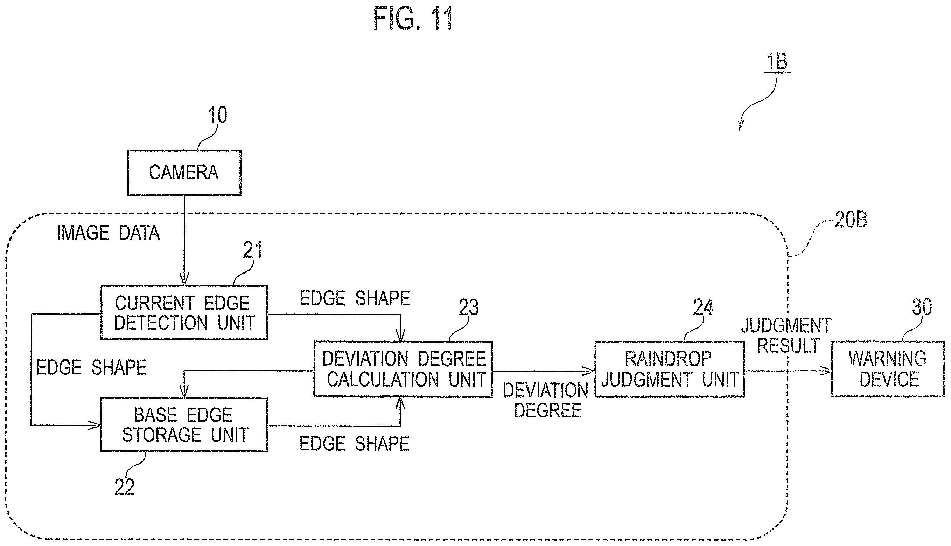

Fig. 11 is a block diagram illustrating details of the computer 20B. Here, Fig. 11 also illustrates the camera 10 and the warning device 30 to clearly show connections between these parts.

As illustrated in Fig. 11, the computer 20B includes an edge detection unit (edge detecting means) 21, a reference edge storage unit (reference edge storing means) 22, a deviation degree calculation unit (deviation degree calculating means) 23, and a raindrop judgment unit (raindrop determining means) 24.

The edge detection unit 21 is configured to detect an edge E for the portion P of the system-equipped vehicle V in an image captured by the camera 10. The captured image includes a captured image of the portion P (for example, the bumper) of the system-equipped vehicle V in addition to a road surface and the like. The edge detection unit 21 detects an edge E in a predetermined region A (that is a region where an image of the bumper of the system-equipped vehicle V is to be captured) within the captured image.

The reference edge storage unit 22 is configured in advance to store, as an initial value, a reference edge shape (first edge line) E1 for the portion P of the system-equipped vehicle V targeted for image capturing by the camera 10. In the present embodiment, the reference edge storage unit 22 stores as the reference edge shape (first edge line) E1 a first edge line E1 detected from a first surrounding image I captured by the camera (image-capturing means) 10 in normal conditions.

Specifically, the reference edge storage unit 22 stores in advance the edge shape E1 obtained from the portion P of the system-equipped vehicle V in normal conditions (in fine weather or the like) where no raindrops are attached to the lens unit of the camera 10.

As described above, the reference edge storage unit (first edge line storing means: reference edge storing means) 22 is configured to store the reference edge shape (first edge line) E1 detected from the first surrounding image I (predetermined region A) captured in normal conditions (in fine weather or the like) by the camera (image-capturing means) 10.

In contrast, the edge detection unit (edge detecting means) 21 is configured to detect an edge (second edge line) E2 from a second surrounding image I (predetermined region A) currently captured by the camera (image-capturing means) 10.

The deviation degree calculation unit 23 is configured to calculate a matching degree between the reference edge shape (first edge line) E1 detected from the first surrounding image I (predetermined region A) captured in normal conditions (in fine weather or the like) by the camera (image-capturing means) 10 and the edge (second edge line) E2 detected from the second surrounding image I (predetermined region A) currently captured by the camera (image-capturing means) 10.

More specifically, the deviation degree calculation unit 23 calculates a deviation degree between the edge shape (first edge line) E1 stored in the reference edge storage unit 22 and the edge (second edge line) E2 detected by the current edge detection unit 21. In this calculation, an edge detected from the second surrounding image I (predetermined region A) currently captured by the camera (image-capturing means) 10 is used as the edge (second edge line) E2.

When the deviation degree calculated by the deviation degree calculation unit 23 is equal to or larger than a predetermined value, the raindrop judgment unit 24 determines that the matching degree has decreased and judges that a raindrop is attached to the lens unit of the camera 10. As described in reference to Fig. 4 in the foregoing first embodiment, when a raindrop is attached to the lens unit, the raindrop forms a new lens and thus the detected edge E2 and the reference edge E1 deviate from each other. In contrast to this, when no raindrop is attached to the lens unit, the detected edge E2 and the reference edge E1 do not deviate from each other theoretically. For this reason, when the deviation degree is equal to or larger than the predetermined value, the raindrop judgment unit 24 determines that the matching degree has decreased and judges that a raindrop is attached to the lens unit of the camera 10. In addition, if it is judged that a raindrop is attached to the lens unit of the camera 10, the raindrop judgment unit 24 sends a notification of the judgment result to the warning device 30. In response to the notification, the warning device 30 presents, to the driver, a voice message or image indicating that a raindrop is attached (for example, an indication that the camera view is poor).

Moreover, in the present embodiment, the reference edge storage unit 22 has a function to update the reference edge E1. To be more specific, if the deviation degree calculated by the deviation degree calculation unit 23 is kept equal to or smaller than a prescribed value over a certain period of time, the reference edge storage unit 22 stores, as the reference edge shape, an edge detected by the edge detection unit 21 within the certain period of time. This configuration also enables handling of a case where even the position or the optical axis of the camera 10 is gradually displaced.

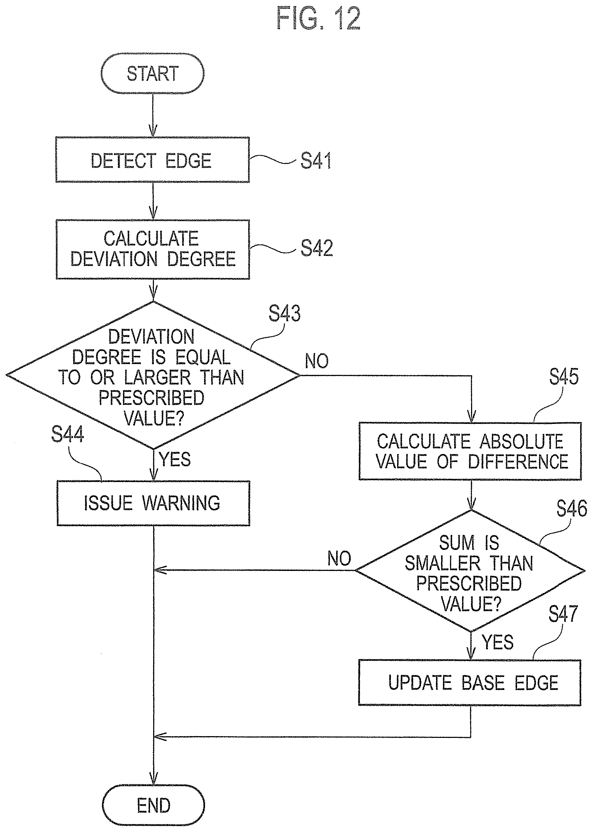

Next, the raindrop detection method is explained with reference to a flowchart. Fig. 12 is a flowchart illustrating the raindrop detection method according to the present embodiment. As illustrated in Fig. 12, first of all, the edge detection unit 21 detects an edge for the predetermined region A in an image captured by the camera (image-capturing means) 10 installed on the system-equipped vehicle V (a moving object) (S41). Thereafter, the deviation degree calculation unit 23 calculates the deviation degree between the detected edge E2 detected in step S41 and the reference edge E1 stored in the reference edge storage unit 22 (S42). Any one of the methods described in reference to Fig. 4 or other method is employed as the method of calculating the deviation degree.

Then, the raindrop judgment unit 24 determines if the deviation degree calculated in step S42 is equal to or larger than a predetermined value (S43). If it is determined that the deviation degree is equal to or larger than the predetermined value (S43: YES), the raindrop judgment unit 24 determines that the matching degree has decreased, determines that a raindrop is attached to the lens unit, and sends a notification of the determination result to the warning device 30. In response to the notification, the warning device 30 issues a warning that the camera view is poor (S44). Then, the processing illustrated in Fig. 12 is terminated.

Meanwhile, if it is determined that the deviation degree is not equal to or larger than the predetermined value (S43: NO), the computer 20B executes update processing of the reference edge E1 in steps S45 to S47. Specifically, the update processing is performed as follows. Firstly, the deviation degree calculation unit 23 calculates the absolute value of the difference between the deviation degree for the current processing cycle and the deviation degree for the previous processing cycle (S45). Then, the deviation degree calculation unit 23 calculates the sum of the absolute values for a predetermined number of past processing cycles and determines if the sum is smaller than a prescribed value (S46).

If the sum is determined as smaller than the prescribed value (S46: YES), it can be said that the deviation degree has stayed small over a predetermined period of time, and it can be assumed that any calculated deviation degree is generated due to a gradual displacement of the position or the optical axis of the camera 10. Thus, the deviation degree calculation unit 23 sends the reference edge storage unit 22 a signal indicating the determination result, and the reference edge storage unit 22 updates the reference edge E1 to the detected edge E2 that is detected by the edge detection unit 21 within the predetermined period of time (S47). After that, the processing illustrated in Fig. 12 is terminated.

Here, the detected edge E2 to which the reference edge E1 is updated may be any of the detected edges E2 detected within the predetermined period of time and may be the latest detected edge E2 or the earliest detected edge E2. Instead, an average of multiple detected edges E2 may be also used.

Meanwhile, if the sum of the deviation degrees is determined as not smaller than the prescribed value (S46: NO), the processing illustrated in Fig. 12 is terminated without updating the reference edge E1.

The foregoing embodiment can also produce operations and effects similar to those in the above first embodiment.

Moreover, when the deviation degree is kept smaller than the prescribed value over the predetermined period of time, an edge detected within the predetermined period of time is stored as the reference edge shape and thereby the reference edge shape is updated. This makes it possible to store the new edge shape corresponding to a deformation of a vehicle component or a change in the installation position or the like of the camera 10.

### (Fourth Embodiment)

A driving assistance system 1C and a raindrop detection method according to the present embodiment are basically the same as those in the aforementioned third embodiment.

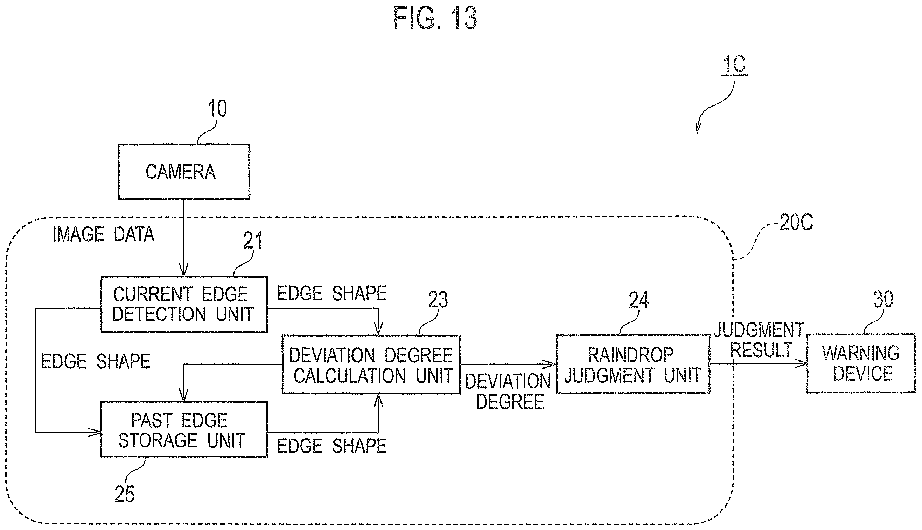

Fig. 13 is a block diagram illustrating details of a computer 20C of the driving assistance system 1C according to the fourth embodiment. Here, Fig. 13 also illustrates a camera 10 and a warning device 30 to clearly show how the components connect with each other.

As illustrated in Fig. 13, in the fourth embodiment, the computer 20C includes a past edge storage unit (past edge storing means: first edge line storing means) 25 in place of the reference edge storage unit (reference edge storing means) 22. The past edge storage unit 25 stores, as a past edge, an edge detected by an edge detection unit 21 at a prescribed period of time before the current time (for example, in the previous processing cycle).

For this reason, the deviation degree calculation unit 23 calculates a deviation degree between the detected edge E2 detected in the current processing by the edge detection unit 21 and the past edge (first edge line) stored in the past edge storage unit 25. Then, if the deviation degree is equal to or larger than a predetermined value, the raindrop judgment unit 24 determines that the matching degree has decreased and determines that a rain drop is attached to the lens unit, and the warning device 30 warns that the view of the camera 10 is poor.

Next, the raindrop detection method according to the fourth embodiment is described. In the raindrop detection method according to the fourth embodiment, the reference edge E1 is not updated. Thus, the processing in steps S41 to S44 illustrated in Fig. 12 is performed, and then, if "NO" is determined in step S43, the processing illustrated in Fig. 12 is terminated without executing the processing in steps S45 to S47.

The foregoing present embodiment can also produce operations and effects similar to those in the above third embodiment.

Moreover, the present embodiment is capable of preventing a situation where sequential change of a raindrop position or shape makes edge detection difficult, and capable of detecting a phenomenon where the luminance gradients change along with the formation of a lens system by the raindrop. Thus, the raindrop detection accuracy can be improved.

Moreover, according to the present embodiment, since the deviation degree from the past edge is calculated, it is possible to detect how the edge shape of a raindrop changes over time depending on airflow during the running of the vehicle. Thus, the raindrop detection accuracy can be improved.

For example, in the foregoing embodiments, the driving assistance system is installed in the vehicle, but is not limited to this. The driving assistance system may be installed in a bicycle, an automatic navigation robot, or the like. In addition, the deviation degree may be calculated not only using the methods described above but also using any other method.

Additionally, depending on day or night, the edge detection region (predetermined region) may be switched between a region including the bumper and a region located near the bumper but not including the bumper, for example.

Further, for a dark place, the detection threshold may be set low so that a substance having high luminance can be determined as a raindrop.

Furthermore, the detection threshold may be set low so that a detected edge shape is more likely to be judged as a raindrop as the circularity of the edge shape becomes higher.

### INDUSTRIAL APPLICABILITY

According to the present invention, it is possible to provide a driving assistance system and a raindrop detection method thereof which are capable of detecting a raindrop while avoiding reduction in the detection accuracy for the surrounding environment.

### REFERENCE SIGNS LIST

1 driving assistance system
10 camera (image-capturing means)
20 computer
21 current edge detection unit (edge detecting means)
22 reference edge storage unit (reference edge storing means: first edge line storing means)
23 deviation degree calculation unit (calculating means)
24 raindrop judgment unit (raindrop determining means)
25 past edge storage unit (past edge storing means: first edge line storing means)
30 warning device
V system-equipped vehicle

## Claims

1. A driving assistance system (1, 1B, 1C) to provide various kinds of information to a driver of a moving object (V) from an image-capturing result of surroundings of the moving object (V), comprising:
image-capturing means (10) installed on the moving object (V) and configured to capture a surrounding image (I) including a portion (P) of the moving object (V);
first edge line storing means (22,25) configured to store a first edge line (E1) detected for the portion (P) of the moving object (V) from a first surrounding image (I) captured in advance by the image-capturing means (10) in normal conditions when no raindrops are attached to a lens unit of the image capturing means (10);
edge detecting means (21) configured to detect a second edge line (E2) for the portion (P) of the moving object (V) from a second surrounding image (I) currently captured by the image-capturing means (10);
calculating means (23) configured to calculate a deviation degree between the first edge line (E1) stored in the first edge line storing means (22,25) and the second edge line (E2) detected by the edge detecting unit;
raindrop judging means (24) configured to judge that a raindrop is attached to the lens unit of the image-capturing means (10), when the deviation degree between the first edge line (E1) and the second edge line (E2) is equal to or larger than a predetermined value, and
detection sensitivity lowering means configured to lower sensitivity of detection of another moving object from the second surrounding image (I) currently captured by the image-capturing means (10) by raising a detection threshold to detect another moving object from the second surrounding image (I), when the raindrop judging means (24) judges that a raindrop is attached to the lens unit of the image-capturing means (10) and the deviation degree between the first edge line (E1) and the second edge line (E2) is lower than a preset given value which is a value larger than the predetermined value.

2. The driving assistance system (1, 1B, 1C) according to claim 1, wherein
the image-capturing means (10) is installed with an optical axis thereof directed obliquely downward from a horizontal direction.

3. The driving assistance system (1, 1B, 1C) according to claim 1 or 2 wherein
when the deviation degree calculated by the calculating means (23) stays equal to or smaller than a prescribed value over a predetermined period of time, the first edge line storing means (22) is configured to store, as the first edge line (E1), the second edge line (E2) detected by the edge detecting means (21) within the predetermined period of time.

4. The driving assistance system (1, 1B, 1C) according to claim 1 or 2 wherein
the first edge line storing means (25) is configured to store, as the first edge line (E1), a second edge line (E2) detected by the edge detection means (21) at a prescribed period of time before the current time.

5. The driving assistance system (1, 1B, 1C) according to any one of claims 1 to 4, wherein
the calculating means (23) is configured to calculate the deviation degree by determining how many pixels a point on the second edge line (E2) detected by the edge detecting means (21) is shifted from a point on the first edge line (E1) stored by the first edge line storing means (22,25), the point on the first edge line is estimated as corresponding to the point on the second edge line (E2) detected by the edge detecting means (21).

6. The driving assistance system (1, 1B, 1C) according to claim 5, wherein the calculating means (23) is configured:
to determine how many pixels each of all the points on the second edge line (E2) detected by the edge detecting means (21) are shifted from the point on the first edge line (E1) stored by the first edge line storing means (22,25), the point on the first edge line is estimated as corresponding to the point on the second edge line (E2) detected by the edge detecting means (21); and
to calculate, as the deviation degree, a sum of the determined numbers of pixels for all the points.

7. The driving assistance system (1, 1B, 1C) according to any one of claims 1 to 4 , wherein
the calculating means (23) is configured to calculate the deviation degree on the basis of a difference between a luminance gradient direction of a point on the second edge line (E2) detected by the edge detecting means (21), and a luminance gradient direction of a point on the first edge line (E1) stored by the first edge line storing means (22,25), the point on the first edge line is estimated as corresponding to the point on the second edge line (E2) detected by the edge detecting means (21).

8. The driving assistance system (1, 1B,1C) according to claim 7, wherein the calculating means (23) is configured:
to calculate an angle formed by a luminance gradient direction of each of all the points on the second edge line (E2) detected by the edge detecting means (21), and a luminance gradient direction of the point on the first edge line (E1) stored by the first edge line storing means (22,25), the point on the first edge line is estimated as corresponding to the point on the second edge line (E2) detected by the edge detecting means (21); and
to calculate, as the deviation degree, a sum of the calculated angles for all the points.

## Patentansprüche

1. Fahrassistenzsystem (1, 1B, 1C) zum Bereitstellen verschiedener Arten von Informationen für einen Fahrer eines sich bewegenden Objekts (V) aus einem Bildaufnahmeergebnis einer Umgebung des sich bewegenden Objekts (V), umfassend
eine Bildaufnahmeeinrichtung (10), die am sich bewegenden Objekt (V) montiert und zum Aufnehmen eines Umgebungsbilds (I) konfiguriert ist, das einen Abschnitt (P) des sich bewegenden Objekts (V) umfasst;
eine Speichereinrichtung (22, 25) für eine erste Randlinie, die zum Speichern einer ersten Randlinie (E1) konfiguriert ist, die für den Abschnitt (P) des sich bewegenden Objekts (V) aus einem ersten Umgebungsbild (I) erfasst wird, das im Voraus durch die Bildaufnahmeeinrichtung (10) unter normalen Bedingungen, wenn keine Regentropfen an einer Linseneinheit der Bildaufnahmeeinrichtung (10) anhaften aufgenommen wurde;
eine Randerfassungseinrichtung (21), die zum Erfassen einer zweiten Randlinie (E2) für den Abschnitt (P) des sich bewegenden Objekts (V) aus einem zweiten Umgebungsbild (I), das gerade von der Bildaufnahmeeinrichtung (10) erfasst wird, konfiguriert ist;
eine Berechnungseinrichtung (23), die zum Berechnen eines Abweichungsgrads zwischen der ersten Randlinie (E1), die in der Speichereinrichtung (22, 25) für eine erste Randlinie gespeichert ist, und der zweiten Randlinie (E2), die durch die Randerfassungseinheit erfasst wurde, konfiguriert ist;
eine Regentropfen-Beurteilungseinrichtung (24), die zum Beurteilen konfiguriert ist, dass ein Regentropfen an der Linseneinheit der Bildaufnahmeeinrichtung (10) anhaftet, wenn der Abweichungsgrad zwischen der ersten Randlinie (E1) und der zweiten Randlinie (E2) gleich oder größer als ein vorbestimmter Wert ist; und
eine Erfassungsempfindlichkeit-Absenkeinrichtung, die dazu konfiguriert ist, die Empfindlichkeit der Erfassung eines anderen sich bewegenden Objekts aus dem zweiten Umgebungsbild (I), das gerade von der Bildaufnahmeeinrichtung (10) erfasst wurde, durch Anheben eines Erfassungsschwellenwerts zu senken, um ein anderes sich bewegendes Objekt aus dem zweiten Umgebungsbild (I) zu erfassen, wenn die Regentropfen-Beurteilungseinrichtung (24) beurteilt, dass ein Regentropfen an der Linseneinheit der Bildaufnahmeeinrichtung (10) anhaftet und der Abweichungsgrad zwischen der ersten Randlinie (E1) und der zweiten Randlinie (E2) geringer als ein voreingestellter gegebener Wert ist, der ein Wert ist, der größer als der vorbestimmte Wert ist.

2. Fahrassistenzsystem (1, 1B, 1C) nach Anspruch 1, wobei
die Bildaufnahmeeinrichtung (10) so montiert ist, dass deren optische Achse von einer horizontalen Richtung schräg nach unten gerichtet ist.

3. Fahrassistenzsystem (1, 1B, 1C) nach Anspruch 1 oder 2, wobei
wenn der durch die Berechnungseinrichtung (23) berechnete Abweichungsgrad über eine vorbestimmte Zeitspanne gleich oder kleiner als ein vorgeschriebener Wert bleibt, die erste Randlinien-Speichereinrichtung (22) dazu konfiguriert ist, die zweite Randlinie (E2), die durch die Randerfassungseinrichtung (21) innerhalb der vorbestimmten Zeitspanne erfasst wurde, als erste Randlinie (E1) zu speichern.

4. Fahrassistenzsystem (1, 1B, 1C) nach Anspruch 1 oder 2, wobei
die erste Randlinien-Speichereinrichtung (25) zum Speichern einer zweiten Randlinie (E2), die von der Randerfassungseinrichtung (21) in einem vorgegebenen Zeitraum vor der aktuellen Zeit erfasst wurde, als erste Randlinie (E1) konfiguriert ist.

5. Fahrassistenzsystem (1, 1B, 1C) nach einem der Ansprüche 1 bis 4, wobei
die Berechnungseinrichtung (23) so konfiguriert ist, dass diese den Abweichungsgrad dadurch berechnet, dass diese ermittelt, um wie viele Pixel ein Punkt auf der zweiten Randlinie (E2), der von der Randerfassungseinrichtung (21) erfasst wurde, gegenüber einem Punkt auf der ersten Randlinie (E1), der von der Speichereinrichtung (22, 25) für eine erste Randlinie gespeichert wurde, verschoben ist, wobei der Punkt auf der ersten Randlinie als dem Punkt auf der zweiten Randlinie (E2) entsprechend geschätzt wird, der von der Randerfassungseinrichtung (21) erfasst wird.

6. Fahrassistenzsystem (1, 1B, 1C) nach Anspruch 5, wobei
die Berechnungseinrichtung (23) dazu konfiguriert ist
zu ermitteln, um wie viele Pixel jeder aller Punkte auf der zweiten Randlinie (E2), die von der Randerfassungseinrichtung (21) erkannt wurden, gegenüber dem Punkt auf der ersten Randlinie (E1), der von der Speichereinrichtung (22, 25) für eine erste Randlinie gespeichert wurde, verschoben ist, wobei der Punkt auf der ersten Randlinie als dem Punkt auf der zweiten Randlinie (E2) entsprechend geschätzt wird, der von der Randerfassungseinrichtung (21) erfasst wurde;
und
eine Summe der ermittelten Pixelzahlen für alle Punkte als Abweichungsgrad zu berechnen.

7. Fahrassistenzsystem (1, 1 B, 1C) nach einem der Ansprüche 1 bis 4, wobei die Berechnungseinrichtung (23) dazu konfiguriert ist, den Abweichungsgrad basierend auf einer Differenz zwischen einer Luminanzgradientenrichtung eines Punkts auf der zweiten Randlinie (E2), die durch die Randerfassungseinrichtung (21) erfasst wurde, und einer Luminanzgradientenrichtung eines Punkts auf der ersten Randlinie (E1), die durch die Speichereinrichtung (22, 25) für eine erste Randlinie gespeichert wurde, zu berechnen, wobei der Punkt auf der ersten Randlinie als dem Punkt auf der zweiten Randlinie (E2) entsprechend geschätzt wird, der durch die Randerfassungseinrichtung (21) erfasst wurde.

8. Fahrassistenzsystem (1, 1B, 1C) nach Anspruch 7, wobei die Berechnungseinrichtung (23) dazu konfiguriert ist:
einen Winkel zu berechnen, der durch eine Luminanzgradientenrichtung eines jeden der Punkte auf der zweiten Randlinie (E2), die durch die Randerfassungseinrichtung (21) erfasst wurde, und eine Luminanzgradientenrichtung des Punkts auf der ersten Randlinie (E1), der durch die Speichereinrichtung (22, 25) für eine erste Randlinie gespeichert wurde, gebildet wird, wobei der Punkt auf der ersten Randlinie als dem Punkt auf der zweiten Randlinie (E2) entsprechend geschätzt wird, der durch die Randerfassungseinrichtung (21) erfasst wurde; und
eine Summe der berechneten Winkel für alle Punkte als Abweichungsgrad zu berechnen.

## Revendications

1. Système d'aide à la conduite (1, 1B, 1C) pour fournir divers types d'informations à un conducteur d'un objet en mouvement (V) à partir d'un résultat de capture d'image d'un environnement de l'objet en mouvement (V), comprenant :
un moyen de capture d'image (10) installé sur l'objet en mouvement (V) et configuré pour capturer une image environnante (I) comportant une partie (P) de l'objet en mouvement (V) ;
un moyen de stockage de première ligne de bord (22, 25) configuré pour stocker une première ligne de bord (E1) détectée pour la partie (P) de l'objet en mouvement (V) à partir d'une première image environnante (I) capturée à l'avance par le moyen de capture d'image (10) dans des conditions normales lorsqu'aucune goutte de pluie n'est attachée à une unité de lentille du moyen de capture d'image (10) ;
un moyen de détection de bord (21) configuré pour détecter une deuxième ligne de bord (E2) pour la partie (P) de l'objet en mouvement (V) à partir d'une deuxième image environnante (I) actuellement capturée par le moyen de capture d'image (10) ;
un moyen de calcul (23) configuré pour calculer un degré d'écart entre la première ligne de bord (E1) stockée dans le moyen de stockage de première ligne de bord (22, 25) et la deuxième ligne de bord (E2) détectée par l'unité de détection de bord ;
un moyen de jugement de goutte de pluie (24) configuré pour juger qu'une goutte de pluie est attachée à l'unité de lentille du moyen de capture d'image (10), lorsque le degré d'écart entre la première ligne de bord (E1) et la deuxième ligne de bord (E2) est supérieur ou égal à une valeur prédéterminée, et
un moyen d'abaissement de la sensibilité de détection configuré pour abaisser la sensibilité de détection d'un autre objet en mouvement à partir de la deuxième image environnante (I) actuellement capturée par le moyen de capture d'image (10) en élevant un seuil de détection pour détecter un autre objet en mouvement à partir de la deuxième image environnante (I), lorsque le moyen de jugement de goutte de pluie (24) juge qu'une goutte de pluie est attachée à l'unité de lentille du moyen de capture d'image (10) et le degré d'écart entre la première ligne de bord (E1) et la deuxième ligne de bord (E2) est inférieur à une valeur donnée prédéfinie qui est une valeur supérieure à la valeur prédéterminée.

2. Système d'aide à la conduite (1, 1B, 1C) selon la revendication 1, dans lequel
le moyen de capture d'image (10) est installé avec un axe optique de celui-ci dirigé obliquement vers le bas à partir d'une direction horizontale.

3. Système d'aide à la conduite (1, 1B, 1C) selon la revendication 1 ou 2, dans lequel
lorsque le degré d'écart calculé par le moyen de calcul (23) reste inférieur ou égal à une valeur prescrite pendant une période de temps prédéterminée, le moyen de stockage de première ligne de bord (22) est configuré pour stocker, comme étant la première ligne de bord (E1), la deuxième ligne de bord (E2) détectée par le moyen de détection de bord (21) pendant la période de temps prédéterminée.

4. Système d'aide à la conduite (1, 1B, 1C) selon la revendication 1 ou 2, dans lequel
le moyen de stockage de première ligne de bord (25) est configuré pour stocker, comme étant la première ligne de bord (E1), une deuxième ligne de bord (E2) détectée par le moyen de détection de bord (21) à une période de temps prescrite avant le moment actuel.

5. Système d'aide à la conduite (1, 1B, 1C) selon l'une quelconque des revendications 1 à 4, dans lequel
le moyen de calcul (23) est configuré pour calculer le degré d'écart en déterminant le nombre de pixels duquel un point sur la deuxième ligne de bord (E2) détectée par le moyen de détection de bord (21) est décalé d'un point sur la première ligne de bord (E1) stockée par le moyen de stockage de première ligne de bord (22, 25), le point sur la première ligne de bord est estimé comme correspondant au point sur la deuxième ligne de bord (E2) détectée par le moyen de détection de bord (21).

6. Système d'aide à la conduite (1, 1B, 1C) selon la revendication 5, dans lequel le moyen de calcul (23) est configuré :
pour déterminer le nombre de pixels duquel chacun de tous les points sur la deuxième ligne de bord (E2) détectée par le moyen de détection de bord (21) est décalé du point sur la première ligne de bord (E1) stockée par le moyen de stockage de première ligne de bord (22, 25), le point sur la première ligne de bord est estimé comme correspondant au point sur la deuxième ligne de bord (E2) détectée par le moyen de détection de bord (21) ; et
pour calculer, comme étant le degré d'écart, une somme des nombres déterminés des pixels pour tous les points.

7. Système d'aide à la conduite (1, 1B, 1C) selon l'une quelconque des revendications 1 à 4, dans lequel
le moyen de calcul (23) est configuré pour calculer le degré d'écart sur la base d'une différence entre une direction de gradient de luminance d'un point sur la deuxième ligne de bord (E2) détectée par le moyen de détection de bord (21), et une direction de gradient de luminance d'un point sur la première ligne de bord (E1) stockée par le moyen de stockage de première ligne de bord (22, 25), le point sur la première ligne de bord est estimé comme correspondant au point sur la deuxième ligne de bord (E2) détectée par le moyen de détection de bord (21).

8. Système d'aide à la conduite (1, 1B, 1C) selon la revendication 7, dans lequel
le moyen de calcul (23) est configuré :
pour calculer un angle formé par une direction de gradient de luminance de chacun de tous les points sur la deuxième ligne de bord (E2) détectée par le moyen de détection de bord (21), et une direction de gradient de luminance du point sur la première ligne de bord (E1) stockée par le moyen de stockage de première ligne de bord (22, 25), le point sur la première ligne de bord est estimé comme correspondant au point sur la deuxième ligne de bord (E2) détectée par le moyen de détection de bord (21) ; et
pour calculer, comme étant le degré d'écart, une somme des angles calculés pour tous les points.
